# EUROPÄISCHE PATENTSCHRIFT

(11) **EP 2 668 493 B1**
(45) Veröffentlichungstag und Bekanntmachung des Hinweises auf die Patenterteilung: **18.03.2015**
(21) Anmeldenummer: 12705628.1
(22) Anmeldetag: 26.01.2012
(51) Int. Cl.: G01N 27/406, G01N 27/407

(54) **SENSORELEMENT UND VERFAHREN ZUM ERFASSEN EINES PARAMETERS EINES GASGEMISCHS IN EINEM GASRAUM**
SENSOR ELEMENT AND A METHOD FOR DETECTING A PARAMETER OF A GAS MIXTURE IN A GAS CHAMBER
ÉLÉMENT DÉTECTEUR ET PROCÉDÉ DE DÉTECTION D'UN PARAMÈTRE D'UN MÉLANGE GAZEUX DANS UN COMPARTIMENT À GAZ

(30) Priorität: 28.01.2011 DE 102011009780
(43) Veröffentlichungstag der Anmeldung: 04.12.2013
(73) Patentinhaber: Continental Automotive GmbH, 30165 Hannover (DE)
(72) Erfinder: REITMEIER, Torsten, 92442 Wackersdorf (DE); WILDGEN, Andreas, 93152 Nittendorf (DE)
(86) Internationale Anmeldenummer: PCT/EP2012/051229
(87) Internationale Veröffentlichungsnummer: WO 2012/101212

(56) Entgegenhaltungen:
- EP-A1- 0 607 385
- EP-A2- 0 152 942
- DE-A1- 3 108 305
- DE-A1- 3 834 987
- DE-A1- 19 610 911
- DE-U1-202004 015 400

## Beschreibung

Die Erfindung betrifft ein Sensorelement und Verfahren zum Erfassen eines Parameters eines Gasgemischs in einem Gasraum.

Zum Erfassen einer Luft/Kraftstoff-Gemischzusammensetzung eines Abgases in einem Abgasstrang einer Brennkraftmaschine weisen heutige Kraftfahrzeuge einen oder mehrere Festkörperelektrolytsensoren in dem Abgasstrang auf. Solche Festkörperelektrolytsensoren sind in diesem Zusammenhang auch unter der Bezeichnung Lambdasonden bekannt. Die Festkörperelektrolytsensoren weisen jeweils einen Festkörper auf mit elektrolytischen Eigenschaften, das heißt, der Festkörper weist die Fähigkeit auf, bestimmte Ionen elektrisch zu leiten. Lambdasonden sind mittlerweile in zahlreichen verschiedenen Ausführungsformen bekannt.

DE 38 34 987 A1 offenbart ein Sensorelement für Grenzstromsensoren zur Bestimmung des Lambda-Wertes von Gasgemischen, insbesondere den Abgasen von Verbrennungsmotoren, mit auf einem O⁻²-Ionen leitenden Festelektrolyten angeordneten äußeren und inneren Pumpelektroden, von denen die innere Pumpelektrode für das durch einen Diffusionsspalt zugeführte Messgas zugänglich ist und der Diffusionsspalt von dem Festelektrolyten abgedeckt wird, und bei dem der die Abdeckung für den Diffusionsspalt bildende Festelektrolyt eine durch Bedrucken eines Keramikträgers in Siebdrucktechnik erzeugte Festelektrolytschicht ist.

DE 20 2004 015 400 U1 offenbart einen Sensor sowohl zur Sauerstoffmessung als auch zur Volumenstrom- und/oder Anströmmessung, bei dem auf einem Bereich einer ersten Oberfläche eines plattenförmigen Trägers aus einem elektrischen Isolator nacheinander Schichten eines Festkörperelektrolyten, Elektroden mit Anschlussbahnen und eine Diffusionsbarriere, die eine der Elektroden bis auf deren Anschlussbahn abdeckt. Auf einem Bereich einer der ersten Oberfläche gegenüberliegenden zweiten Oberfläche des plattenförmigen Trägers ist eine Schicht aus einem elektrischen Leiter als wenigstens ein Heizungselement angeordnet.

EP 0 152 942 A2 offenbart eine Vorrichtung zum Erfassen eines Luft-Kraftstoff-Verhältnisses eines Kraftstoffgemischs. Die Vorrichtung weist eine Abtrennung auf mit einer ersten Seite und einer zweiten Seite. Die Abtrennung begrenzt auf der ersten Seite einen Raum, der atmosphärische Luft aufnimmt und der mit einer Umgebungsatmosphäre pneumatisch gekoppelt ist, und auf der zweiten Seite einen Raum, der Abgase aufnimmt und der mit einer Quelle der Abgase pneumatisch gekoppelt ist, wobei die Abtrennung zumindest einen Abschnitt eines sauerstoffionenleitenden Festkörperelektrolyten umfasst. Ferner weist die Vorrichtung erste Elektrodenmittel auf, die der Atmosphärenluft ausgesetzt sind, und zweite Elektrodenmittel, die dem Abgas ausgesetzt sind, wobei der sauerstoffionenleitende Festkörperelektrolyt zwischen dem ersten und zweiten Elektrodenmittel angeordnet ist. Ferner weist die Vorrichtung Mittel zum Begrenzen der Gasdiffusion der Abgase zu dem gasaufnehmenden Raum auf.

DE 31 08 305 A1 offenbart einen polarographischen Messfühler zur Bestimmung des Lambda-Äquivalenzpunktes in Abgasen, der nach dem Diffusionsgrenzstrom-Prinzip arbeitet, mit einem sauerstoffionenleitenden Festelektrolytkörper in Form eines Plättchens, das auf einer Seite eine Anode und auf der anderen Seite eine Kathode trägt, an die eine konstante Spannung anlegbar ist, wobei die Kathoden mit einer Diffusionsbarriere in Form einer porösen Schicht bedeckt ist und beide Elektroden dem zu messenden Gas ausgesetzt sind, wobei die Kathode in zwei Teil-Kathoden aufgespaltet ist, die im Messbereich nahe beieinander liegen, und dass die eine Teilkathode höher kathodisch polarisiert ist als die zweite Teilkathode.

EP 0 607 385 A1 offenbart einen Sensor zur Bestimmung der Konzentration bestimmter Bestandteile im Abgas von Verbrennungsmotoren. Der Sensor umfasst eine Pumpzelle, deren Kathode mit einer ersten Diffusionsbarriere und deren Anode mit einer zweiten Diffusionsbarriere versehen ist. In einer alternativen Ausführungsform umfasst der Sensor eine unbelastete Bezugselektrode im Messgas zur Messung der Polarisation mindestens einer der Elektroden gegen diese Bezugselektrode.

DE 196 10 911 A1 offenbart eine Vorrichtung zur Bestimmung des Partialdrucks eines Gases in einem Gasgemisch, insbesondere in Luft, mit einem Gassensor, der eine Messkammer mit einer von einem Festelektrolyten gebildeten Wandung aufweist und der mindestens ein Elektrodenpaar aufweist, dessen eine innere Elektrode in der Messkammer angeordnet ist und dessen andere äußere Elektrode mit dem Gasgemisch in Kontakt steht. Ferner weist die Vorrichtung eine Regeleinheit auf, die dazu vorgesehen ist, im Betrieb eine Pumgspannung an ein dem Festelektrolyten zugeordneten Elektrodenpaar anzulegen, um so einen Pumpstrom zu erzeugen, wobei die Regeleinheit den Pumpstrom zeitweise unterbricht. Des Weiteren umfasst die Vorrichtung eine Messeinheit, die in der stromfreien Zeit die durch eine Nernst'sche Spannung erzeugte Potentialdifferenz zwischen einem dem Festelektrolyten zugeordneten Elektrodenpaar misst.

Die Aufgabe, die der Erfindung zugrunde liegt, ist es, ein Sensorelement sowie Verfahren zum Erfassen des Parameters des Gasgemischs in dem Gasraum zu schaffen, die einen Beitrag leisten, den Parameter zuverlässig und präzise erfassen zu können.

Die Aufgabe wird gelöst durch die Merkmale der unabhängigen Patentansprüche. Vorteilhafte Weiterbildungen der Erfindung sind in den Unteransprüchen gekennzeichnet.

Weist das Sensorelement eine zweite Elektrode auf, die so angeordnet ist, dass sie in einem weiteren ersten Bereich von dem Gasgemisch des Gasraums beaufschlagt wird. Das Sensorelement umfasst einen Festkörperelektrolyten, der so ausgebildet ist, dass er mit der ersten und zweiten Elektrode gekoppelt ist. Das Sensorelement weist einen planaren Schichtaufbau auf. Die erste Elektrode und die zweite Elektrode sind entlang einer ersten Achse vorgegeben beabstandet und entlang einer zweiten Achse, die orthogonal zu den jeweiligen Schichten und orthogonal zu der ersten Achse verläuft, vertikal versetzt zueinander zumindest teilweise in dem Festkörperelektrolyten eingebettet. Eine Oberfläche der zweiten Elektrode und eine Oberfläche der ersten Diffusionsbarriereschicht bilden eine Ebene, über die die zweite Elektrode von dem Gasgemisch des Gasraums beaufschlagt wird und über die die erste Elektrode mittelbar über die erste Diffusionsbarriereschicht von dem Gasgemisch des Gasraums beaufschlagt wird.

Der Festkörperelektrolyt ist insbesondere mechanisch gekoppelt mit der ersten Elektrode und der zweiten Elektrode. Der Festkörperelektrolyt ist vorzugsweise derart ausgebildet, dass er in einem spezifischen Betriebstemperaturbereich Sauerstoffionen elektrolytisch transportieren kann. Vorteilhafterweise kann das erfindungsgemäße Sensorelement kostengünstig hergestellt werden. Des Weiteren kann es einen Beitrag leisten, eine Lebensdauer und eine Zuverlässigkeit des Sensorelements zu erhöhen, da das Sensorelement einen Schichtaufbau ohne Hohlräume und/oder Gaszuflusskanäle ermöglicht. Bei einer Sensorvorrichtung, bei der die erste Elektrode über eine Gaszutrittsbegrenzung mit einem Hohlraum und/oder einem Gaszuflusskanal mit dem Gasgemisch des Gasraums beaufschlagt wird, kann beispielsweise ein Kondensat in den Hohlraum und/oder in den Gaszuflusskanal eindringen. Da die Sensorvorrichtung hohen Temperaturschwankungen ausgesetzt ist, können thermomechanischen Spannungen z. B. in dem Festkörperelektrolyten, der den jeweiligen Hohlraum umgibt, entstehen. Die thermomechanischen Spannungen können zu einer Beschädigung der Sensorvorrichtung führen. Durch die vertikal versetzte Anordnung der ersten und zweiten Elektrode können der erste Bereich der ersten Elektrode und der weitere erste Bereich der zweiten Elektrode bezogen auf die zweite Achse vertikal versetzt zueinander angeordnet sein.

In einer vorteilhaften Ausgestaltung weist die erste Diffusionsbarriereschicht einen porösen keramischen Werkstoff auf.

In einer weiteren vorteilhaften Ausgestaltung weist die erste Diffusionsbarriereschicht Zirkoniumdioxid auf.

In einer weiteren vorteilhaften Ausgestaltung sind die erste Elektrode und die zweite Elektrode auf einer gleichen Seite des Festkörperelektrolyten angeordnet. Dies ermöglicht eine kostengünstige Herstellung des Sensorelements.

In einer weiteren vorteilhaften Ausgestaltung weist das Sensorelement eine zweite Diffusionsbarriereschicht auf. Die zweite Diffusionsbarriereschicht ist derart angeordnet, dass sie in dem weiteren ersten Bereich gekoppelt ist mit der zweiten Elektrode und die zweite Elektrode in dem weiteren ersten Bereich über die zweite Diffusionsbarriereschicht von dem Gasgemisch des Gasraums beaufschlagt wird. Die zweite Diffusionsbarriereschicht weist für zumindest eine vorgegebene Gaskomponente des Gasgemischs einen zweiten Diffusionswiderstand auf, der geringer ist als ein erster Diffusionswiderstand der ersten Diffusionsbarriereschicht. Der zweite Diffusionswiderstand für die vorgegebene Gaskomponente ist vorzugsweise wesentlich geringer als der erste Diffusionswiderstand, Vorzugsweise umfasst die Gaskomponente Sauerstoffmoleküle. Die zweite Diffusionsbarriereschicht kann beispielsweise ausgebildet sein, die zweite Elektrode abzuschirmen vor oxidierbaren Gaskomponenten, beispielsweise Kohlenwasserstoffen und Wasserstoffmolekülen.

In einer weiteren vorteilhaften Ausgestaltung weisen die erste Diffusionsbarriereschicht und die zweite Diffusionsbarriereschicht den gleichen keramischen Werkstoff auf. Dies ermöglicht eine einfache Herstellung des Sensorelements.

In einer weiteren vorteilhaften Ausgestaltung weist der weitere erste Bereich der zweiten Elektrode eine größere Fläche auf als der erste Bereich der ersten Elektrode.

Gemäß einem zweiten Aspekt zeichnet sich die Erfindung aus durch ein Verfahren zum Erfassen eines Parameters eines Gasgemischs in einem Gasraum mit einem Sensorelement gemäß dem ersten Aspekt, das in dem Gasraum angeordnet ist und dessen erste und zweite Elektrode mit einer Stromquelle elektrisch gekoppelt sind. Hierbei umfasst das Verfahren folgende Schritte: Während einer Messphase wird die Stromquelle im Sinne eines Abschaltens angesteuert.

Während der Messphase wird eine Elektrodenspannung zwischen der ersten und zweiten Elektrode erfasst und abhängig von einer Abweichung der Elektrodenspannung von einer vorgegebenen Sollspannung wird ein Pumpstrom ermittelt.

In einer Betriebsphase, die zeitlich auf die Messphase folgt, wird die Stromquelle derart angesteuert, dass sie den Pumpstrom an die zweite Elektrode des Sensorelements abgibt. Die Schritte der Messphase und das darauffolgende Ansteuern der Stromquelle zur Abgabe des Pumpstroms an die zweite Elektrode werden mehrfach durchlaufen im Sinne einer Minimierung der Abweichung zwischen der Elektrodenspannung und der vorgegebenen Sollspannung. Abhängig von dem Pumpstrom wird der Parameter des Gasgemischs in dem Gasraum ermittelt.

Beispielsweise kann die Messphase eine vorgegebene konstante erste Zeitdauer und die Betriebsphase eine konstante vorgegebene zweite Zeitdauer aufweisen und die Messphase und die Betriebsphase zyklisch wiederholt werden. Vorzugsweise folgt eine erneute Messphase unmittelbar auf die Betriebsphase, die auf eine vorhergehende Messphase folgt. Die Betriebsphase kann hierbei jedoch unterbrochen werden, beispielsweise für eine oder mehrere weitere Phasen zum Erfassen weiterer Betriebsgrößen, zum Beispiel zum Erfassen einer Pumpspannung. Der Parameter des Gasgemischs abhängig von dem Pumpstrom wird beispielsweise jeweils ermittelt, wenn in einer oder mehreren unmittelbar aufeinander folgenden Messphasen die Abweichung zwischen der Elektrodenspannung und der Sollspannung im Wesentlichen gleich null ist. Während der Messphase wird die Stromquelle im Sinne eines Abschaltens angesteuert, so dass die Stromquelle im Wesentlichen keinen Strom, insbesondere keinen Strom, an das Sensorelement abgibt. Die während der Messphase erfasste Elektrodenspannung kann eine Nernst-Spannung repräsentieren. Das erfindungsgemäße Verfahren kann somit einen Beitrag leisten, den Parameter des Gasgemischs in dem Gasraum präzise und zuverlässig zu ermitteln, vorzugsweise eine Sauerstoffkonzentration des Gasgemischs präzise und zuverlässig zu ermitteln. Des Weiteren kann durch das Betreiben des Sensorelements mit einer gesteuerten Stromquelle die Lebensdauer des Festkörperelektrolyten und somit des Sensorelements erhöht werden im Vergleich zu einem amperometrischen Betrieb des Sensorelements. Bei dem amperometrischen Betrieb wird eine vorgegebene Spannung an die erste und zweite Elektrode angelegt und ein Strom, der zwischen den beiden Elektroden fließt, erfasst. Bei einem amperometrischen Betrieb des Sensorelements kann, insbesondere wenn an der zweiten Elektrode kein oder nur sehr wenig Sauerstoffmoleküle vorhanden sind, ein elektrisches Feld, das durch die an die erste und zweite Elektrode angelegte Spannung in dem Festkörperelektrolyten erzeugt wird, dazu führen, dass das Zirkoniumdioxid des Festkörperelektrolyt zumindest teilweise zersetzt wird und damit nach einer gewissen Zeit der Festkörperelektrolyt seine elektrolytischen Eigenschaften verliert. Vorteilhafterweise ist für das Ermitteln des Parameters das Sensorelement mit nur zwei Elektroden ausreichend. Ein Referenzkanal und/oder eine Referenzelektrode für eine Sauerstoffzuführung sind hierfür nicht erforderlich. Eine Anzahl von Zuleitungen zu dem Sensorelement kann somit ebenfalls gering gehalten werden.

Gemäß einem dritten Aspekt zeichnet sich die Erfindung aus durch ein Verfahren zum Erfassen eines Parameters eines Gasgemischs in einem Gasraum mit einem Sensorelement, das in dem Gasraum angeordnet ist und dessen erste und zweite Elektrode elektrisch gekoppelt sind mit einer Stromquelle. Das Sensorelement umfasst hierbei die erste Elektrode und eine Gaszutrittsbegrenzung, die derart angeordnet und ausgebildet ist, dass die erste Elektrode in einem vorgegebenen ersten Bereich über die Gaszutrittsbegrenzung von dem Gasgemisch des Gasraums beaufschlagt wird. Des Weiteren weist das Sensorelement die zweite Elektrode auf, die so angeordnet ist, dass sie in einem weiteren ersten Bereich von dem Gasgemisch des Gasraums beaufschlagt wird. Das Sensorelement umfasst einen Festkörperelektrolyten, der so ausgebildet ist, dass er mit der ersten und zweiten Elektrode gekoppelt ist. Das Verfahren umfasst hierbei folgende Schritte: Während einer Messphase wird die Stromquelle im Sinne eines Abschaltens angesteuert.

Während der Messphase wird eine Elektrodenspannung zwischen der ersten und zweiten Elektrode erfasst und abhängig von einer Abweichung der Elektrodenspannung von einer vorgegebenen Sollspannung wird ein Pumpstrom ermittelt.

In einer Betriebsphase, die zeitlich auf die Messphase folgt, wird die Stromquelle derart angesteuert, dass sie den Pumpstrom an die zweite Elektrode des Sensorelements abgibt. Die Schritte der Messphase und das darauffolgende Ansteuern der Stromquelle zur Abgabe des Pumpstroms an die zweite Elektrode werden mehrfach durchlaufen im Sinne einer Minimierung der Abweichung zwischen der Elektrodenspannung und der vorgegebenen Sollspannung. Abhängig von dem Pumpstrom wird der Parameter des Gasgemischs in dem Gasraum ermittelt.

Vorteilhafterweise kann so der Parameter des Gasgemisches mit einer Sensorvorrichtung erfasst werden, bei der das Sensorelement die zwei Elektroden, den Festkörperelektrolyten und die Gaszutrittsbarriere umfasst, wobei die Gaszutrittsbarriere einen Kanal und/oder eine Kammer aufweist. Der Kanal oder die Kammer kann beispielsweise eine zusätzliche Diffusionsbarriere aufweisen, die angeordnet und ausgebildet ist, ein Eindringen des Gasgemischs des Gasraums in die Kammer oder in den Kanal zu begrenzen.

In einer vorteilhaften Ausgestaltung der Erfindung gemäß dem zweiten und dritten Aspekt weist das Sensorelement ein Heizelement zum Erwärmen des Festkörperelektrolyten auf. Das Heizelement wird während der Messphase im Sinne eines Abschaltens angesteuert und während der Betriebsphase wird das Heizelement angesteuert im Sinne einer Einstellung einer vorgegebenen Betriebstemperatur des Festkörperelektrolyten. Dies ermöglicht die Elektrodenspannung, die die Nernst-Spannung repräsentieren kann, präziser zu erfassen.

In einer weiteren vorteilhaften Ausgestaltung der Erfindung gemäß dem zweiten und dritten Aspekt repräsentiert der Parameter eine Sauerstoffkonzentration des Gasgemischs.

In einer weiteren vorteilhaften Ausgestaltung der Erfindung gemäß dem zweiten und dritten Aspekt ist der Gasraum ein Ansaugraum einer Brennkraftmaschine.

In einer weiteren vorteilhaften Ausgestaltung der Erfindung gemäß dem dritten Aspekt umfasst die Gaszutrittsbegrenzung eine erste Diffusionsbarriereschicht, die derart angeordnet ist, dass sie mit der ersten Elektrode in einem vorgegebenen ersten Bereich gekoppelt ist und die erste Elektrode nur in dem ersten Bereich über die erste Diffusionsbarriereschicht von dem Gasgemisch des Gasraums beaufschlagt wird.

Ausführungsbeispiele der Erfindung sind im Folgenden anhand der schematischen Zeichnungen erläutert.

Es zeigen:
- Figur 1: eine Schnittansicht eines ersten Ausführungsbeispiels für ein Sensorelement zum Erfassen eines Parameters eines Gasgemischs in einem Gasraum,
- Figur 2: eine Schnittansicht eines zweiten Ausführungsbeispiels für das Sensorelement zum Erfassen des Parameters des Gasgemischs in dem Gasraum,
- Figur 3: eine Prinzipdarstellung eines Transports von Sauerstoffionen durch einen Festkörperelektrolyten,
- Figur 4: eine Pumpstrom-Sauerstoffkonzentrations-Kennlinienfeld und
- Figur 5: ein Nernst-Spannungsdiagramm.

Elemente gleicher Konstruktion oder Funktion sind figurenübergreifend mit den gleichen Bezugszeichen versehen.

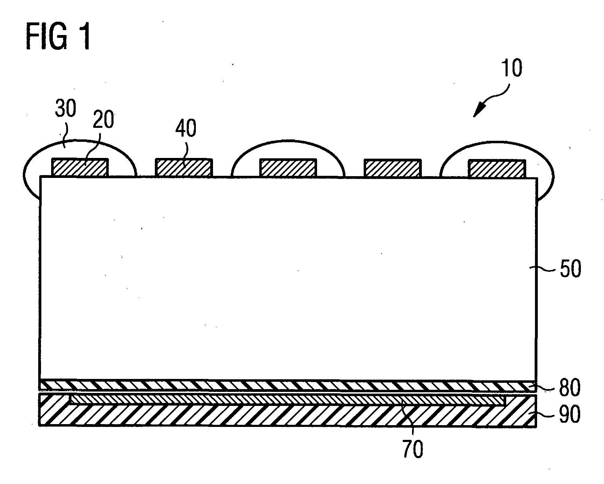

Figur 1 zeigt ein Beispiel eines Sensorelements 10 zum Erfassen eines Parameters eines Gasgemischs in einem Gasraum welches nicht Teil der Erfindung ist, jedoch das Verständnis der Erfindung erleichtert.

Das Sensorelement 10 kann beispielsweise in einem Kraftfahrzeug an einer oder mehreren Stellen angeordnet sein. Beispielsweise kann das Sensorelement 10 an einer oder mehreren Stellen in einem Ansaugtrakt einer Brennkraftmaschine des Kraftfahrzeugs angeordnet sein, zum Beispiel in einem Ansaugraum des Ansaugtrakts. Das Sensorelement 10 kann beispielsweise genutzt werden, eine Sauerstoffkonzentration zu ermitteln in dem Ansaugtrakt stromabwärts nach einer Einmündung einer Abgasrückführung. Alternativ oder zusätzlich kann das Sensorelement 10 in einem Abgasstrang einer Brennkraftmaschine angeordnet sein. Vorzugsweise kann das Sensorelement 10 in einer Umgebung mit einer Sauerstoffkonzentration von näherungsweise > 2 %, insbesondere > 5 %, genutzt werden.

Das Sensorelement 10 weist eine erste Elektrode 20 sowie eine erste Diffusionsbarriereschicht 30 auf, die derart angeordnet ist, dass sie mit der ersten Elektrode 20 in einem vorgegebenen ersten Bereich gekoppelt ist und die erste Elektrode 20 nur in dem ersten Bereich über die erste Diffusionsbarriereschicht 30 von dem Gasgemisch des Gasraums beaufschlagt wird. Des Weiteren weist das Sensorelement 10 eine zweite Elektrode 40 auf, die so angeordnet ist, dass sie in einem weiteren ersten Bereich von dem Gasgemisch des Gasraums beaufschlagt wird. Ferner weist das Sensorelement 10 einen Festkörperelektrolyten 50 auf, der so ausgebildet ist, dass er mit der ersten 20 und zweiten Elektrode 40 gekoppelt ist. Der Festkörperelektrolyt 50 kann beispielsweise Yttrium stabilisiertes Zirkoniumdioxid (YSZ) aufweisen. Die erste Elektrode 20 und zweite Elektrode 40 können beispielsweise ein Edelmetall aufweisen, zum Beispiel Platin, Palladium, Iridium, Tantal oder eine Kombination aus diesen Metallen. Bei dem in Figur 1 gezeigten Sensorelement 10 sind die erste Elektrode 20 und die zweite Elektrode 40 auf einer gleichen Seite des Festkörperelektrolyten 50 angeordnet. Das Sensorelement 10 kann beispielsweise einen planaren Schichtaufbau aufweisen. Das Sensorelement 10 kann beispielsweise eine Schutzschicht 90 aufweisen. In der Schutzschicht 90 kann beispielsweise ein Heizelement 70 eingebettet sein. Zwischen dem Heizelement 70 und dem Festkörperelektrolyten 50 kann beispielsweise eine Heizisolation 80 angeordnet sein. Das Heizelement 70 kann beispielsweise genutzt werden, eine Arbeitstemperatur des Festkörperelektrolyten 50 einzustellen.

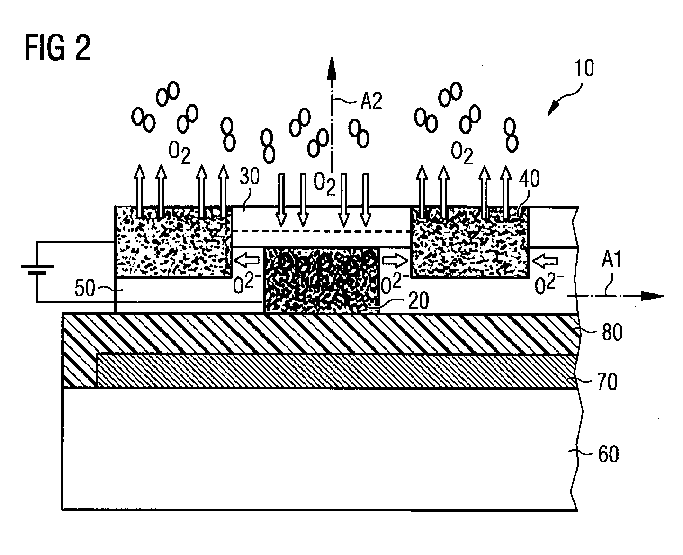

In dem in Figur 2 gezeigten Ausführungsbeispiel des Sensorelements 10 ist die erste Elektrode 20 und die zweite Elektrode 40 entlang einer ersten Achse A1 vorgegeben beabstandet und entlang einer zweiten Achse A2, die orthogonal zu der ersten Achse A1 ist, vertikal versetzt zueinander zumindest teilweise in dem Festkörperelektrolyten 50 eingebettet. Das Sensorelement 10 kann beispielsweise den Träger 60, das Heizelement 70 und die Heizisolation 80 aufweisen, die als planare Schichten ausgebildet sein können. Zwischen dem Heizelement 70 und dem Festkörperelektrolyten 50 kann beispielsweise die Heizisolation 80 angeordnet sein.

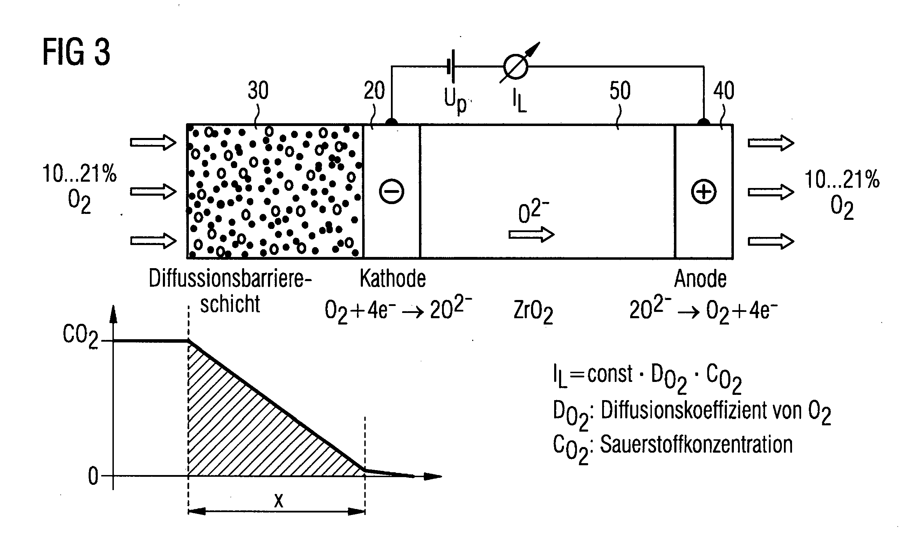

Figur 3 zeigt eine Prinzipdarstellung eines Transports von Sauerstoffionen durch den Festkörperelektrolyten 50. Der Gasraum, beispielsweise der Ansaugraum der Brennkraftmaschine, in dem das Sensorelement 10 angeordnet sein kann, weist beispielsweise eine Sauerstoffkonzentration von > 2 % auf, zum Beispiel eine Sauerstoffkonzentration von näherungsweise 10 % bis 20 %. Der in dem Gasgemisch enthaltene Sauerstoff diffundiert über die Diffusionsbarriereschicht zu der ersten Elektrode 20. Die Diffusionsbarriereschicht weist einen vorgegebenen ersten Diffusionswiderstand auf.

Vorteilhafterweise wird das Sensorelement 10 während einer Betriebsphase so betrieben, dass die erste Elektrode 20 als Kathode und die zweite Elektrode 40 als Anode betrieben wird. Hierzu werden die erste 20 und zweite Elektrode 40 derart elektrisch gekoppelt mit einer Stromquelle, oder alternativ mit einer Spannungsquelle, dass die zweite Elektrode 40 eine Anodenfunktion und die erste Elektrode 20 eine Kathodenfunktion aufweist. Tritt ein mageres Gasgemisch durch die Diffusionsbarriereschicht hindurch, werden Sauerstoffmoleküle an der ersten Elektrode 20 elektrochemisch zu Sauerstoffionen reduziert. An der ersten Elektrode 20, die die Kathodenfunktion aufweist, nimmt ein Sauerstoffmolekül vier Elektronen auf. So entstehen aus dem jeweiligen Sauerstoffmolekül jeweils zwei Sauerstoffionen. Der Festkörperelektrolyt 50 weist beispielsweise Zirkoniumdioxid auf, das mit Yttriumoxid (Y₂O₃) dotiert ist. Dotierungsbedingte Fehlstellen in einer Gitterstruktur des Zirkoniumdioxids ermöglichen, dass die Sauerstoffionen durch den Festkörperelektrolyten 50 diffundieren können. Die negativen Sauerstoffionen werden von der ersten Elektrode 20 angezogen und an der zweiten Elektrode 40, rekombiniert. Die erste Elektrode 20 und die zweite Elektrode 40 können beispielsweise ein poröses Edelmetall aufweisen, beispielsweise können die Elektroden 20, 40 einen Cermet-Werkstoff aufweisen.

Ein Nachstrom an Sauerstoffmolekülen wird durch die erste Diffusionsbarriereschicht 30 oder eine anders ausgebildete Gaszutrittsbarriere begrenzt. Durch den gezielten Transport von Sauerstoffionen weg von der ersten Elektrode 20 sinkt die Sauerstoffkonzentration an der ersten Elektrode 20 auf näherungsweise 0 ab. Es kann somit einer Referenzgasumgebung an der ersten Elektrode 20 mit einer Sauerstoffkonzentration von 0 % eingestellt werden, die zu einem Luftzahlverhältnis von 1 (λ = 1) korrespondiert.

Das Sensorelement 10 wird während der Betriebsphase im Grenzstrombetrieb betrieben. In diesem Grenzstrombetrieb ist ein Pumpstrom, der erforderlich ist, um an der ersten Elektrode 20 die Referenzgasumgebung mit λ = 1 einzustellen, abhängig von der Sauerstoffkonzentration in dem Gasraum. Die Sauerstoffkonzentration in dem Gasraum kann beispielsweise abhängig von einer vorgegeben Kennlinie ermittelt werden.

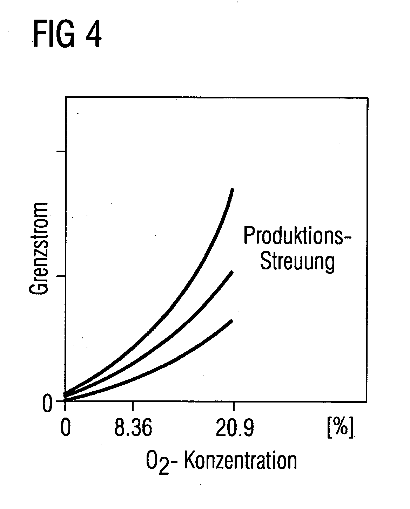

Figur 4 zeigt solch ein Pumpstrom-Sauerstoffkonzentrations-Kennlinienfeld für den Grenzstrombetrieb für das Sensorelement 10.

Zum Erfassen eines Parameters eines Gasgemischs in einem Gasraum mit dem Sensorelement 10 kann das in dem Gasraum angeordnet Sensorelement 10 mit der ersten 20 und zweiten Elektrode 40 mit einer Stromquelle elektrisch gekoppelt werden. Während einer Messphase wird die Stromquelle im Sinne eines Abschaltens angesteuert. Während der Messphase fließt somit im Wesentlichen kein Pumpstrom. Das Heizelement 70 des Sensorelements 10 wird während der Messphase ebenfalls im Sinne eines Abschaltens angesteuert. Während der Messphase wird eine Elektrodenspannung zwischen der ersten 20 und zweiten Elektrode 40 erfasst und abhängig von einer Abweichung der Elektrodenspannung von einer vorgegebenen Sollspannung wird ein Pumpstrom ermittelt. Die Messphase kann beispielsweise 1 ms andauern. Aufgrund der unterschiedlichen Sauerstoffpartialdrücke an den beiden Elektroden 20, 40 weisen die erste 20 und zweite Elektrode 40 eine Potentialdifferenz auf, die auch unter der Bezeichnung Nernst-Spannung bekannt ist. Bleibt der Pumpstrom längere Zeit abgeschaltet, gleichen sich die Sauerstoffpartialdrücke der ersten 20 und zweiten Elektrode 40 an, d. h., die Nernst-Spannung sinkt. Die Nernst-Spannung kann in der Messphase, wenn im Wesentlichen kein Pumpstrom fließt, gemessen werden. Während der Betriebsphase, bei der Pumpstrom aktiv in das Sensorelement 10 eingespeist wird, liegt zwischen der ersten 20 und zweiten Elektrode 40 eine Pumpspannung an, die die Summe repräsentiert von der Nernst-Spannung und einem Produkt aus dem Pumpstrom und einer Zellimpedanz zwischen der ersten 20 und zweiten Elektrode 40.

Die Nernst-Spannung kann genutzt werden, den Pumpstrom so zu regeln, dass die Referenzgasumgebung mit λ = 1 an der ersten Elektrode 20 zumindest näherungsweise gleich bleibt. Da das Sensorelement 10 vorzugsweise in einer Umgebung genutzt wird, bei dem das Gasgemisch eine Sauerstoffkonzentration von zumindest größer 2 %, insbesondere größer 5 %, aufweist, reicht die zweite Elektrode 40 als Referenzelektrode gegenüber der ersten Elektrode 20 aus, um eine gleichbleibende Referenzgasumgebung an der ersten Elektrode 20 zu schaffen. Im Vergleich zu einer idealen Referenzelektrode, die in einem Luftkanal mit im Wesentlichen 21 % Sauerstoffkonzentration angeordnet ist, unterscheidet sich, wenn an der ersten Elektrode 20 die Sauerstoffkonzentration 0 % ist, die gemessene Nernst-Spannung nur geringfügig.

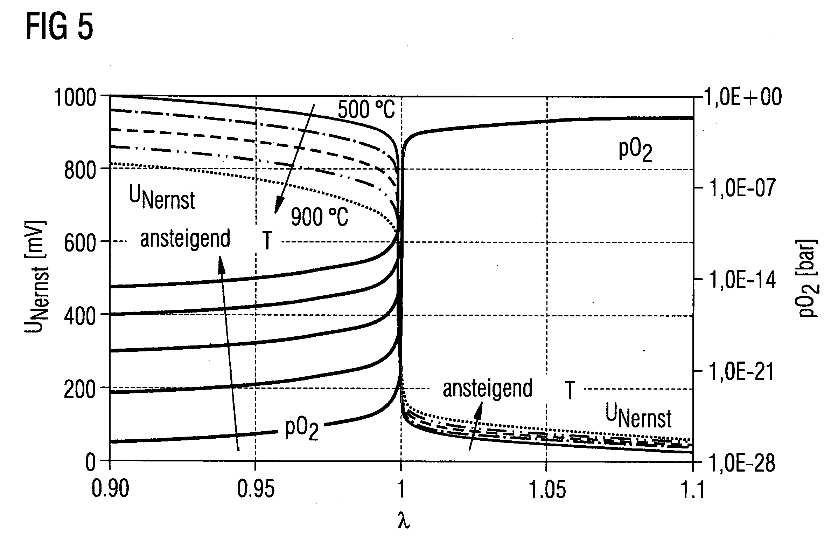

Figur 5 zeigt ein Nernst-Spannungsdiagramm. Eine Änderung der Sauerstoffkonzentration in dem Gasgemisch hat zunächst zur Folge, dass sich die Sauerstoffkonzentration an der ersten Elektrode 20 ändert und sich somit die erfasste Nernst-Spannung ändert. Abhängig von der Abweichung der erfassten Nernst-Spannung von dem vorgegebenen Sollwert, der beispielsweise 400 mV sein kann, kann der Pumpstrom angepasst werden, so dass sich an der ersten Elektrode 20 die Referenzgasumgebung mit 0 % Sauerstoffkonzentration wieder einstellt.

Hierzu wird in der Betriebsphase, die zeitlich auf die Messphase folgt, die Stromquelle derart angesteuert, dass sie den Pumpstrom an die zweite Elektrode 40 des Sensorelements 10 abgibt. Das Sensorelement wird im Grenzstrombetrieb betrieben. Während der Betriebsphase wird das Heizelement 70 angesteuert im Sinne einer Einstellung einer vorgegebenen Betriebstemperatur des Festkörperelektrolyten 50. Die Betriebstemperatur kann beispielsweise 650 °C sein. Die Betriebsphase kann beispielsweise 4 ms andauern. Die Schritte der Messphase und das darauf folgende Ansteuern der Stromquelle zur Abgabe des Pumpstroms an die zweite Elektrode 40 werden mehrfach durchlaufen im Sinne einer Minimierung der Abweichung zwischen der Elektrodenspannung und der vorgegebenen Sollspannung. Abhängig von dem Pumpstrom wird der Parameter des Gasgemischs in dem Gasraum ermittelt. Der Parameter wird beispielsweise jeweils ermittelt, wenn detektiert wird, dass die Abweichung zwischen der erfassten Elektrodenspannung und der Sollspannung minimal ist. Beispielsweise kann die Sauerstoffkonzentration des Gasgemisches ermittelt werden abhängig von der vorgegebenen Kennlinie, die die Abhängigkeit des Pumpstroms von der Sauerstoffkonzentration im Grenzstrombetrieb des Sensorelements 10 charakterisiert.

Zusätzlich ist möglich, die Sollspannung in vorgegebenen Zeitabständen zu verändern. Beispielsweise kann, wenn die Betriebsphase 4 ms andauert und die Messphase 1 ms, die Sollspannung jede Sekunde zwischen einem ersten und einem zweiten Spannungswert umgeschaltet werden. Dies hat den Vorteil, dass Polarisationseffekte in dem Festkörperelektrolyten 50 geringer gehalten werden können.

## Patentansprüche

1. Sensorelement (10) zum Erfassen eines Parameters eines Gasgemischs in einem Gasraum, das aufweist:
- eine erste Elektrode (20),
- eine erste Diffusionsbarriereschicht (30), die derart angeordnet ist, dass sie mit der ersten Elektrode (20) in einem vorgegebenen ersten Bereich gekoppelt ist und die erste Elektrode (20) nur in dem ersten Bereich über die erste Diffusionsbarriereschicht (30) von dem Gasgemisch des Gasraums beaufschlagt wird,
- eine zweite Elektrode (40), die so angeordnet ist, dass sie in einem weiteren ersten Bereich von dem Gasgemisch des Gasraums beaufschlagt wird, und
- einen Festkörperelektrolyten (50), der so ausgebildet ist, dass er mit der ersten (20) und zweiten Elektrode (40) gekoppelt ist, wobei das Sensorelement einen planaren Schichtaufbau aufweist, die erste Elektrode (20) und die zweite Elektrode (40) entlang einer ersten Achse (A1) vorgegeben beabstandet und entlang einer zweiten Achse (A2), die orthogonal zu den jeweiligen Schichten und orthogonal zu der ersten Achse (A1) verläuft, vertikal versetzt zueinander zumindest teilweise in dem Festkörperelektrolyten (50) eingebettet sind und eine Oberfläche der zweiten Elektrode (40) und eine Oberfläche der ersten Diffusionsbarriereschicht (30) eine Ebene bilden, über die die zweite Elektrode (40) von dem Gasgemisch des Gasraums beaufschlagt wird und über die die erste Elektrode (20) mittelbar über die erste Diffusionsbarriereschicht (30) von dem Gasgemisch des Gasraums beaufschlagt wird.

2. Sensorelement (10) nach Anspruch 1, bei dem die erste Diffusionsbarriereschicht (30) einen porösen keramischen Werkstoff aufweist.

3. Sensorelement (10) nach Anspruch 1 oder 2, bei dem die erste Diffusionsbarriereschicht (30) Zirkoniumdioxid aufweist.

4. Sensorelement (10) nach einem der vorstehenden Ansprüche, bei dem das Sensorelement (10) eine zweite Diffusionsbarriereschicht aufweist,
- die derart angeordnet ist, dass sie in dem weiteren ersten Bereich gekoppelt ist mit der zweiten Elektrode (40) und die zweite Elektrode (40) nur in dem weiteren ersten Bereich über die zweite Diffusionsbarriereschicht von dem Gasgemisch des Gasraums beaufschlagt wird, und
- die für zumindest eine vorgegebene Gaskomponente des Gasgemischs einen zweiten Diffusionswiderstand aufweist, der geringer ist als ein erster Diffusionswiderstand der ersten Diffusionsbarriereschicht (30).

5. Sensorelement (10) nach Anspruch 4, bei dem die erste Diffusionsbarriereschicht (30) und die zweite Diffusionsbarriereschicht den gleichen keramischen Werkstoff aufweisen.

6. Sensorelement (10) nach einem der vorstehenden Ansprüche, bei dem der weitere erste Bereich der zweiten Elektrode (40) eine größere Fläche aufweist als der erste Bereich der ersten Elektrode (20).

7. Verfahren zum Erfassen eines Parameters eines Gasgemischs in einem Gasraum mit einem Sensorelement (10) gemäß einem der Ansprüche 1 bis 6, das in dem Gasraum angeordnet ist und dessen erste (20) und zweite Elektrode (40) mit einer Stromquelle elektrisch gekoppelt sind, mit folgenden Schritten:
- während einer Messphase wird die Stromquelle im Sinne eines Abschaltens angesteuert,
- während der Messphase wird eine Elektrodenspannung zwischen der ersten (20) und zweiten Elektrode (40) erfasst und abhängig von einer Abweichung der Elektrodenspannung von einer vorgegebenen Sollspannung wird ein Pumpstrom ermittelt,
- in einer Betriebsphase, die zeitlich auf die Messphase folgt, wird die Stromquelle derart angesteuert, dass sie den Pumpstrom an die zweite Elektrode (40) des Sensorelements (10) abgibt, wobei die Schritte der Messphase und das darauffolgende Ansteuern der Stromquelle zu Abgabe des Pumpstroms an die zweite Elektrode (40) mehrfach durchlaufen werden im Sinne einer Minimierung der Abweichung zwischen der Elektrodenspannung und der vorgegebenen Sollspannung, und
- abhängig von dem Pumpstrom wird der Parameter des Gasgemischs in dem Gasraum ermittelt.

8. Verfahren nach dem vorstehenden Anspruch 7, bei dem das Sensorelement (10) ein Heizelement (70) zum Erwärmen des Festkörperelektrolyten (50) aufweist, wobei
- das Heizelement (70) während der Messphase im Sinne eines Abschaltens angesteuert wird und
- während der Betriebsphase das Heizelement (70) angesteuert wird im Sinne einer Einstellung einer vorgegebenen Betriebstemperatur des Festkörperelektrolyten (50).

9. Verfahren nach einem der vorstehenden Ansprüche 7 oder 8, bei dem der Parameter eine Sauerstoffkonzentration des Gasgemischs repräsentiert.

10. Verfahren nach einem der vorstehenden Ansprüche 7 bis 9, bei dem der Gasraum ein Ansaugraum einer Brennkraftmaschine ist.

11. Verfahren nach einem der vorstehenden Ansprüche 8 bis 10, bei dem die Gaszutrittsbegrenzung eine erste Diffüsionsbarriereschicht (30) umfasst, die derart angeordnet ist, dass sie mit der ersten Elektrode (20) in einem vorgegebenen ersten Bereich gekoppelt ist und die erste Elektrode (20) nur in dem ersten Bereich über die erste Diffusionsbarriereschicht (30) von dem Gasgemisch des Gasraums beaufschlagt wird.

## Claims

1. Sensor element (10) for the detection of a parameter of a gas mixture in a gas chamber, which comprises:
- a first electrode (20),
- a first diffusion barrier layer (30), which is disposed such that it is coupled to the first electrode (20) in a specified first region and the first electrode (20) is acted upon by the gas mixture of the gas chamber via the first diffusion barrier layer (30) only in the first region,
- a second electrode (40), which is disposed such that it is acted upon by the gas mixture of the gas chamber in another first region, and
- a solid state electrolyte (50), which is designed such that it is coupled to the first (20) and second (40) electrodes, wherein the sensor element has a planar layered structure, the first electrode (20) and the second electrode (40) are spaced apart along a first axis (A1) at specified intervals and along a second axis (A2) that extends orthogonally to the respective layers and orthogonally to the first axis (A1), are vertically offset relative to each other and at least partly embedded in the solid state electrolyte (50) and one surface of the second electrode (40) and one surface of the first diffusion barrier layer (30) form a plane, via which the second electrode (40) is acted upon by the gas mixture of the gas chamber and via which the first electrode (20) is indirectly acted upon by the gas mixture of the gas chamber via the first diffusion barrier layer (30).

2. Sensor element (10) according to Claim 1, in which the first diffusion barrier layer (30) comprises a porous ceramic material.

3. Sensor element (10) according to Claim 1 or 2, in which the first diffusion barrier layer (30) comprises zirconium dioxide.

4. Sensor element (10) according to any one of the preceding claims, in which the sensor element (10) comprises a second diffusion barrier layer,
- which is disposed such that it is coupled in the other first region to the second electrode (40) and the second electrode (40) is acted upon by the gas mixture of the gas chamber only in the other first region via the second diffusion barrier layer, and
- which has a second diffusion resistance for at least one specified gas component of the gas mixture that is lower than a first diffusion resistance of the first diffusion barrier layer (30).

5. Sensor element (10) according to Claim 4, in which the first diffusion barrier layer (30) and the second diffusion barrier layer comprise the same ceramic material.

6. Sensor element (10) according to any one of the preceding claims, in which the other first region of the second electrode (40) has a larger area than the first region of the first electrode (20).

7. Method for the detection of a parameter of a gas mixture in a gas chamber with a sensor element (10) according to any one of Claims 1 to 6, which is disposed in the gas chamber and whose first (20) and second (40) electrodes are electrically coupled to a power supply, with the following steps:
- during a measurement phase the power supply is controlled so as to switch off,
- during the measurement phase an electrode voltage between the first (20) and second (40) electrodes is detected and a pump current is determined depending on a deviation of the electrode voltage from a specified target voltage,
- in an operating phase that follows the measurement phase in time, the power supply is controlled such that it outputs the pump current to the second electrode (40) of the sensor element (10), wherein the steps of the measurement phase and the subsequent controlling of the power supply to output the pump current to the second electrode (40) are carried out multiple times so as to minimize the deviation between the electrode voltage and the specified target voltage, and
- the parameter of the gas mixture in the gas chamber is determined depending on the pump current.

8. Method according to the preceding Claim 7, in which the sensor element (10) comprises a heating element (70) for heating the solid state electrolyte (50), wherein
- the heating element (70) is controlled during the measurement phase so as to switch off and
- during the operating phase the heating element (70) is controlled so as to set up a specified operating temperature of the solid state electrolyte (50).

9. Method according to any one of the preceding Claims 7 or 8, in which the parameter represents an oxygen concentration of the gas mixture.

10. Method according to any one of the preceding Claims 7 to 9, in which the gas chamber is an induction chamber of an internal combustion engine.

11. Method according to any one of the preceding Claims 8 to 10, in which the gas inlet limiter comprises a first diffusion barrier layer (30), which is disposed such that it is coupled to the first electrode (20) in a specified first region and the first electrode (20) is acted upon by the gas mixture of the gas chamber via the first diffusion barrier layer (30) only in the first region.

## Revendications

1. Elément (10) capteur pour la détection d'un paramètre d'un mélange gazeux dans un espace pour du gaz, qui a :
- une première électrode (20),
- une première couche (30) formant barrière de diffusion, qui est disposée de manière à être couplée à la première électrode (20) dans une première partie donnée à l'avance et la première électrode (20) n'est soumise au mélange gazeux de l'espace pour du gaz, par l'intermédiaire de la première couche (30) formant barrière de diffusion, que dans la première partie,
- une deuxième électrode (40), qui est disposée de manière à être soumise au mélange gazeux de l'espace pour du gaz dans une autre première partie, et
- un électrolyte (50) solide, qui est constitué de manière à être couplé à la première (20) et à la deuxième électrodes (40), l'élément capteur ayant une structure stratifiée plane, la première électrode (20) et la deuxième électrode (40) étant, en étant à une distance donnée à l'avance le long d'un premier axe (A1) et le long d'un deuxième axe (A2), qui est orthogonal aux couches respectives et orthogonales au premier axe (A1), incorporées en étant décalées verticalement l'une par rapport à l'autre, au moins en partie, dans l'électrolyte (50) solide et une surface de la deuxième électrode (40) et une surface de la première couche (30) formant barrière de diffusion formant un plan, par lequel la deuxième électrode (40) est soumise au mélange gazeux de l'espace pour du gaz et par lequel la première électrode (20) est soumise indirectement, par la première couche (30) formant barrière de diffusion, au mélange gazeux de l'espace pour du gaz.

2. Elément (10) capteur suivant la revendication 1, dans lequel la première couche (30) formant barrière de diffusion comporte un matériau céramique poreux.

3. Elément (10) capteur suivant la revendication 1 ou 2, dans lequel la première couche (30) formant barrière de diffusion comporte du dioxyde de zirconium.

4. Elément (10) capteur suivant l'une des revendications précédentes, dans lequel l'élément (10) capteur a une deuxième couche formant barrière de diffusion,
- qui est disposée de manière à être couplée, dans l'autre première partie, avec la deuxième électrode (40) et la deuxième électrode (40) n'est soumise au mélange gazeux de l'espace pour du gaz, par l'intermédiaire de la deuxième couche formant barrière de diffusion, que dans l'autre première partie, et
- qui a, pour au moins un constituant gazeux donné à l'avance du mélange gazeux, une deuxième résistance à la diffusion, qui est plus petite qu'une première résistance à la diffusion de la première couche (30) formant barrière de diffusion.

5. Elément (10) capteur suivant la revendication 4, dans lequel la première couche (30) formant barrière de diffusion et la deuxième couche formant barrière de diffusion comportent le même matériau céramique.

6. Elément (10) capteur suivant l'une des revendications précédentes, dans lequel l'autre première partie de la deuxième électrode (40) a une surface plus grande que la première partie de la première électrode (20).

7. Procédé de détection d'un paramètre d'un mélange gazeux dans un espace pour du gaz, comprenant un élément (10) capteur suivant l'une des revendications 1 à 6, qui est disposé dans l'espace pour du gaz et dont la première (20) et la deuxième électrodes (40) sont reliées électriquement à une source de courant, comprenant les stades suivantes :
- pendant une phase de mesure, on commande la source de courant dans le sens d'une déconnexion,
- pendant la phase de mesure, on détecte la tension d'électrode entre la première (20) et la deuxième électrodes (40) et, en fonction d'un écart de la tension d'électrode à une tension de consigne donné à l'avance, on détermine un courant de pompage,
- dans une phase de fonctionnement, qui suit dans le temps la phase de mesure, on commande la source de courant, de manière à ce qu'elle cède le courant de pompage à la deuxième électrode (40) de l'élément (10) capteur, les stades de la phase de mesure et de la commande, qui s'ensuit de la source de courant pour céder le courant de pompage à la deuxième électrode (40), s'effectuant plusieurs fois dans le sens d'une minimisation de l'écart entre la tension d'électrode et la tension de consigne donné à l'avance, et
- on détermine le paramètre du mélange gazeux dans l'espace pour du gaz en fonction du courant de pompage.

8. Procédé suivant la revendication 7 précédente, dans lequel l'élément (10) capteur a un élément (70) de chauffage pour réchauffer l'électrolyte (50) solide, dans lequel
- on commande l'élément (70) de chauffage, pendant la phase de mesure, dans le sens d'une déconnexion et
- pendant la phase de fonctionnement, on commande l'élément (70) de chauffage dans le sens de l'établissement d'une température de fonctionnement donnée à l'avance de l'électrolyte (50) solide.

9. Procédé suivant l'une des revendications précédentes 7 ou 8, dans lequel le paramètre représente une concentration d'oxygène du mélange gazeux.

10. Procédé suivant l'une des revendications précédentes 7 à 9, dans lequel l'espace pour du gaz est un compartiment d'aspiration d'un moteur à combustion interne.

11. Procédé suivant l'une des revendications précédentes 8 à 10, dans lequel la limitation d'accès du gaz comprend une première couche (30) formant barrière de diffusion, qui est disposée de manière à être couplée à la première électrode (20) dans une première partie donnée à l'avance, et la première électrode (20) n'est soumise, par l'intermédiaire de la première couche (30) formant barrière de diffusion, au mélange gazeux de l'espace pour du gaz que dans la première partie.
